Europäisches Patentamt

(19) **European Patent Office**

**Office européen des brevets**

(11) Veröffentlichungsnummer: **0 054 827**
**B1**

(12) **EUROPÄISCHE PATENTSCHRIFT**

(45) Veröffentlichungstag der Patentschrift:
**08.08.84**

(21) Anmeldenummer: **81110226.8**

(22) Anmeldetag: **08.12.81**

(51) Int. Cl.³: **G 21 C 3/32**

(54) **Brennstabbündel für einen Siedewasserreaktor.**

(30) Priorität: **19.12.80 SE 8008987**

(43) Veröffentlichungstag der Anmeldung:
**30.06.82 Patentblatt 82/26**

(45) Bekanntmachung des Hinweises auf die Patenterteilung:
**08.08.84 Patentblatt 84/32**

(84) Benannte Vertragsstaaten:
**BE CH DE FR GB IT LI NL**

(56) Entgegenhaltungen:
**EP - A - 0 036 142**
**BE - A - 642 316**
**DE - A - 1 439 426**
**FR - A - 1 544 351**
**FR - A - 2 171 279**
**FR - A - 2 296 919**
**GB - A - 1 195 670**
**US - A - 3 163 584**
**US - A - 3 713 974**

(73) Patentinhaber: **AB ASEA-ATOM, S-721 83 Västeras (SE)**

(72) Erfinder: **Borrman, Bo, Ing., Rörverksgatan 16,**
**S-724 74 Västeräs (SE)**
Erfinder: **Ode, Bengt, Ing., Löpargatan 80,**
**S-722 41 Västeräs (SE)**

(74) Vertreter: **Boecker, Joachim, Dr.-Ing.,**
**Rathenauplatz 2-8, D-6000 Frankfurt a.M. 1 (DE)**

BUNDESDRUCKEREI BERLIN

## Beschreibung

Die Erfindung betrifft ein Brennstabbündel für einen Siedewasserreaktor gemäß dem Oberbegriff des Anspruches 1. Ein solches Brennstabbündel ist aus der DE-A- 1 439 426 bekannt.

Bei dem aus der DE-A-1 439 426 bekannten Brennstabbündel werden die Brennstäbe von mehreren axial übereinander angeordneten Abstandshaltern gegeneinander positioniert, die so beschaffen sind, daß die Brennstäbe sich in ihrer Längsrichtung relativ zur Brennstoffkanalwand verschieben können. Außerdem ist zwischen den oberen Enden der Brennstäbe und der oberen Gitterplatte ein freier vertikaler Abstand vorhanden, so daß sich die Brennstäbe während des Betriebes so weit frei nach oben ausdehnen können oder von der Kühlmittelströmung nach oben gehoben werden können, bis sie gegen die obere Gitterplatte stoßen.

Bei dieser bekannten Anordnung besteht die obere Gitterplatte aus einer massiven ebenen Platte, in welche Löcher für den Durchtritt des Kühlmittels vorgesehen sind. Obwohl diesen Löchern ein möglichst großer Querschnitt gegeben wird, stellt das verbleibende zusammenhängende Gitterwerk der Platte einen relativ großen Strömungswiderstand dar. Außerdem ist bei dem bekannten Brennstabbündel die Brennstoffkanalwand über die obere Gitterplatte hinaus verlängert zur Bildung eines Vorraumes als Verteilerkammer für die Kühlflüssigkeit. Am äußersten oberen Ende der Kanalwand ist diese durch innenseitig angebrachte umlaufende horizontale Leisten verstärkt, um die nötige Festigkeit zur Aufstellung des Brennelementbündels auf einer Tragplatte zu gewinnen. Die Herausnahme der oberen Gitterplatte aus dem Brennstabbündel zur Freilegung der Brennstäbe ist wegen dieser Verstärkungsleisten offensichtlich nicht auf einfache Weise möglich.

Aus der US-A-3 713 974 ist ein Brennelementbündel bekannt, bei dem sich in vertikaler Richtung Abstandshalter abwechseln, von denen die einen an der Brennstoffkanalwand fixiert sind, während die anderen in vertikaler Richtung eine gewisse Relativbewegung gegenüber der Brennstoffkanalwand ausführen können. Auf diese Weise soll die mechanische Belastung der Brennstoffkanalwand, insbesondere infolge unterschiedlicher thermischer Dehnungen der Brennstäbe und der Brennstoffkanalwand, herabgesetzt werden.

Der Erfindung liegt die Aufgabe zugrunde, ein Brennstabbündel der eingangs genannten Art in der Weise weiterzuentwickeln, daß der Strömungswiderstand der oberen Gitterplatte relativ klein ist und die Herstellung der oberen Gitterplatte relativ große Toleranzen zuläßt. Ferner soll das Brennstabbündel in der Weise ausgebildet sein, daß die obere Gitterplatte relativ leicht entfernbar ist, so daß die Brennstäbe aus dem Brennstabbündel ohne weiteres individuell herausgezogen werden können.

Zur Lösung dieser Aufgabe wird ein Brennstabbündel nach dem Oberbegriff des Anspruchs 1 vorgeschlagen, welches erfindungsgemäß die im kennzeichnenden Teil des Anspruches 1 genannten Merkmale hat.

Vorteilhafte Ausgestaltungen der Erfindung sind in den Unteransprüchen genannt.

Die Ausbildung der oberen Gitterplatte aus wenigen Diagonalschienen und Querschienen mit einzelnen horizontalen Vorsprüngen hat den Vorteil, daß die obere Gitterplatte nur einen minimalen Teil des Querschnittes des Brennstoffkanals überdeckt. Der Strömungswiderstand der Gitterplatte ist daher sehr gering. Zum Teil werden die Brennstäbe nur durch die freien Enden der genannten horizontalen Vorsprünge in Richtung nach oben blockiert. Die Einhaltung sehr genauer Toleranzen ist hierbei nicht erforderlich. Durch die Auflage der oberen Gitterplatte auf Tragflächen am Rande des Brennstoffkanals und ihre Befestigung durch eine zentrale Verschraubvorrichtung läßt sich die obere Gitterplatte auf einfache Weise entfernen, so daß die einzelnen Brennstäbe leicht und schnell von oben zugänglich gemacht werden können.

Anhand des in den Figuren gezeigten Ausführungsbeispieles soll die Erfindung näher erläutert werden. Es zeigt

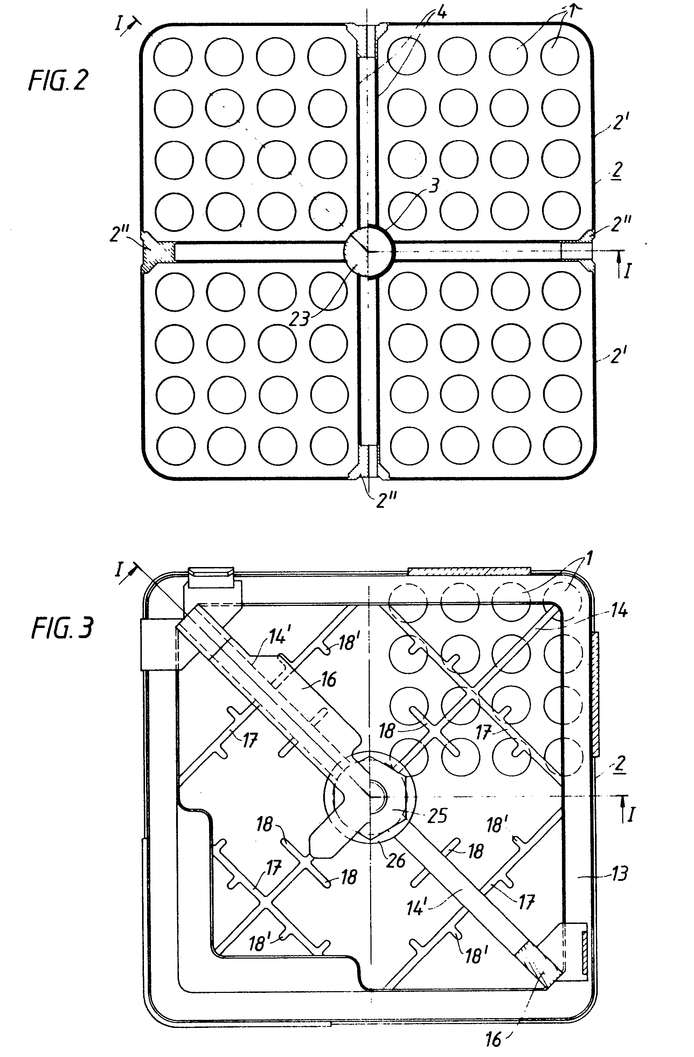

Fig. 1 ein Brennstabbündel gemäß der Erfindung im Vertikalschnitt längs der Linie I-I in Fig. 2 und 3,

Fig. 2 ein Horizontalschnitt längs der Linie II-II in Fig. 1,

Fig. 3 einen Horizontalschnitt längs der Linie III-III in Fig. 1,

Fig. 4 eine untere Gitterplatte des Brennstabbündels in einem partiellen Schnitt längs der Linie I-I in Fig. 2 und 3.

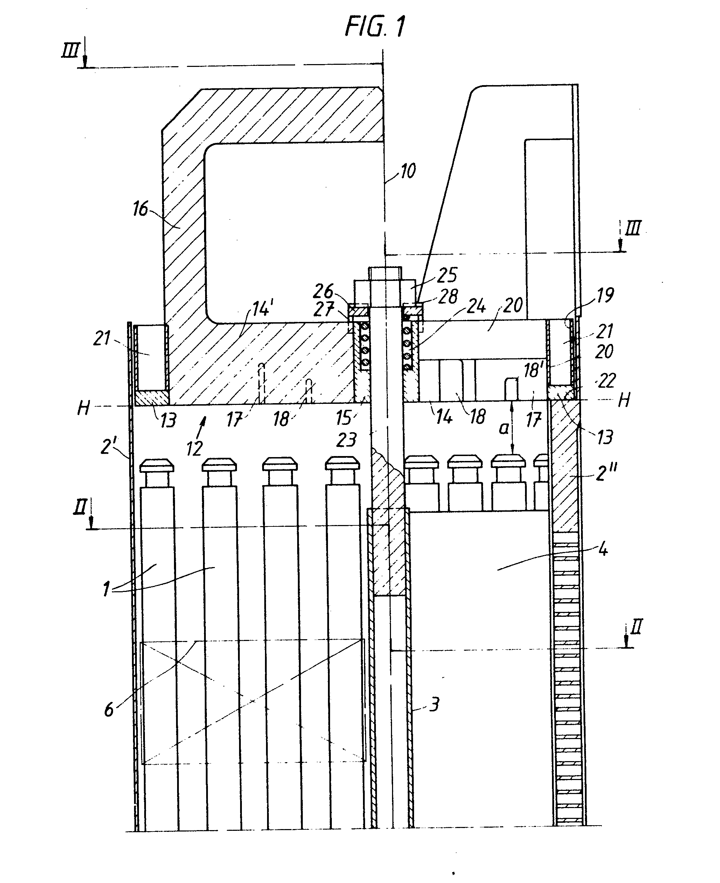

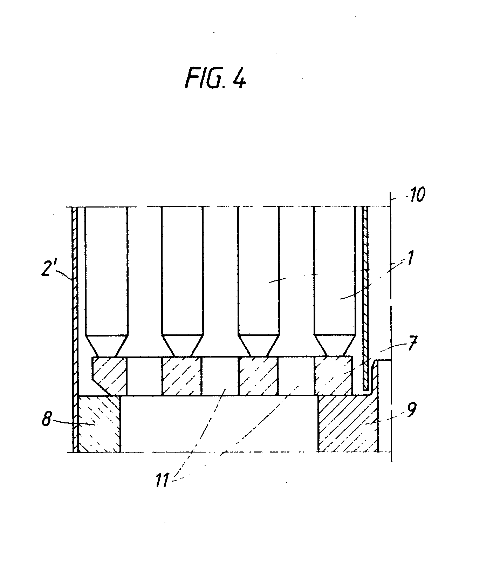

Das in den Figuren gezeigte Brennstabbündel hat 64 vertikal angeordnete Brennstäbe 1, die von einer Brennstoffkanalvorrichtung 2 umgeben sind, welche einen im wesentlichen quadratischen Querschnitt hat. Die Brennstoffkanalvorrichtung 2 enthält vier langgestreckte, vertikal angeordnete Blechelemente 2', die einen L-förmigen Querschnitt haben und über vier vertikale Stützleisten 2'' durch Schweißen miteinander verbunden sind. Der von der Brennstoffkanalvorrichtung 2 umschlossene Raum ist längs des aktiven Abschnittes der Brennstäbe in vier gleiche große Teilräume unterteilt, und zwar durch vier Doppeltrennwände, welche zwischen den Stützleisten 2'' und einem zentralen Wasserrohr 3 angeordnet sind. Jede Doppeltrennwand ist aus zwei parallelen Wandelementen 4 zusammengesetzt. Das Brennstabbündel ist somit in vier Teilbündel mit je sechzehn Brennstäben aufgeteilt, wobei jedes Teilbündel mit mehreren Abstandshaltern versehen ist, von denen jeder für sechzehn Brennstäbe 1 ausgeführt ist. Die Abstandshalter sind mit einer stark reduzierten axialen Bewegungsfreiheit im Verhältnis zu den angrenzenden Brennstoffkanalabschnitten angeordnet, beispielsweise mit Hilfe mehrerer nach innen gerichteter, geprägter Sperrklötze, die auf solche Weise in der Brennstoffkanalvorrichtung angebracht sind, daß die Bewegungsfreiheit vertikal nach oben bei Raumtemperatur weniger als 5% der Brennstablänge, vorzugsweise weniger als 1% der Stablänge beträgt. Ein solcher Abstandshalter ist in Fig. 1 mit Hilfe eines mit Diagonalen versehenen, strich-punktierten Rechteckes 6 angedeutet. Die Brennstäbe 1 eines jeden Teilbündels ruhen mit ihren unteren Enden auf einer ihnen zugeordneten unteren Gitterplatte 7 (Fig. 4), die zusammen mit den unteren Gitterplatten der übrigen Teilbündel von einem Übergangsstück 8 und einem in diesem angeordneten zentralen Bauteil 9 getragen wird. Die vertikale Mittelachse des Brennstabbündels ist mit 10 bezeichnet.

Jede untere Gitterplatte 7 hat neun durchgehende Löcher 11 für einen dem Teilbündel zugeführten Wasserfluß. Die Brennstoffkanalvorrichtung 2 hat oberhalb der Wandelemente 4 einen Abschnitt mit im wesentlichen quadratischem Querschnitt, in welchem Abschnitt eine für sämtliche Brennstäbe gemeinsame obere Gitterplatte 12 oberhalb der oberen Endflächen der Brennstäbe 1 angeordnet ist. Sämtliche auf die Brennstäbe gerichteten Flächen der oberen Gitterplatte 12 liegen in einer Horizontalebene H-H, deren vertikaler Abstand von den Brennstäben in Fig. 1 mit a bezeichnet ist. Der Abstand a hängt ab von der herrschenden Temperatur. Bei normalem Reaktorbetrieb ist der entsprechende Abstand bedeutend kleiner, jedoch größer als Null. Die obere Gitterplatte 12 ist derart aufgebaut, daß jeder Brennstab 1 bei einer genügend großen Verschiebung axial nach oben durch mechanischen Kontakt mit der oberen Gitterplatte an einer weiteren Verschiebung in dieser Richtung gehindert wird. Die gezeigte Konstruktion bildet nicht nur eine wirksame Sperranordnung für sämtliche Brennstäbe, sondern es wird durch sie zugleich der hydraulische Widerstand im Brennstabbündel weniger erhöht, als bei den bekannten Ausführungen oberer Gitterplatten.

Die obere Gitterplatte 12 enthält einen im wesentlichen quadratischen Rahmen 13, der ohne nennenswertes Spiel vor dem oberen Abschnitt der Brennstoffkanalvorrichtung umschlossen wird, wobei die Außenseiten des Rahmens an je einer Seite des oberen Abschnittes der Brennstoffkanalvorrichtung anliegen. Die obere Gitterplatte enthält außerdem zwei horizontale, miteinander fluchtende Diagonalschienen 14 und zwei ebenfalls miteinander fluchtende horizontale Diagonalschienen 14', die doppelt so hoch sind, wie die Diagonalschienen 14, und senkrecht zu diesen verlaufen. Jede Diagonalschiene 14 und 14' ist mit ihrem einen Ende starr in einer Ecke des Rahmens 13 befestigt, während das andere Ende aller vier Diagonalschienen an einer zentralen Hülse 15 festgeschweißt ist. Die Diagonalschienen 14' sind an ihren radial äußeren Enden mechanisch mit einem Hebebügel 16 verbunden. Jede Diagonalschiene 14 und 14' hat einen mittleren Abschnitt, der starr mit dem mittleren Abschnitt einer Querschiene 17 verbunden ist, deren beiden Enden mit dem Rahmen 13 starr verbunden sind. Jede Diagonalschiene 14, 14' und jede Querschiene 17 ist mit mehreren, in der Horizontalebene H-H liegenden Vorsprüngen 18 bzw. 18' versehen, von denen jeder vertikal oberhalb eines ihm zugeordneten Brennstabes 1 angeordnet sind. Solche Brennstäbe, die nicht vertikal unterhalb eines Vorsprunges 18 oder 18' liegen, sind vertikal unterhalb eines Abschnittes des Rahmens 13 oder der Diagonalschienen 14 und 14' angeordnet.

Der Rahmen 13 ist längs eines überwiegenden Teils des Umfanges mit einer radial äußeren vertikalen Wand 19 und einer radial inneren vertikalen Wand 20 versehen ist. Dadurch wird ein U-förmiger Auffangkanal 21 für Spritzwasser gebildet. Die obere Gitterplatte 12 übernimmt so außer ihrer Hauptaufgabe auch die eines Verteilerorgans für Notkühlwasser.

Die obere Gitterplatte 12 ruht mit dem Rahmen 13 auf nach oben gerichteten Tragflächen 22, die am oberen Ende jeder der vier vertikalen Stützleisten 2'' ausgebildet sind.

Das zentrale Wasserrohr 3 ist mit seinem oberen Ende an dem unteren Ende einer koaxial angeordneten Stange 23 festgeschweißt, die an ihrem oberen Ende von der Hülse 15 sowie einer spiralförmigen Feder 24 umschlossen ist, die mit Hilfe einer Mutter 25, die auf dem mit Gewinde versehenen Endabschnitt der Stange 23 aufgeschraubt ist, mehr oder weniger zusammengepreßt werden kann, wobei eine genau definierte Belastung der Tragflächen 22 eingestellt werden kann.

Zwischen Mutter 25 und Feder 24 ist eine Sicherungsscheibe 26 vorgesehen, die mit mehreren axial gerichteten, an mindestens einer der Diagonalschienen 14 und 14' anliegenden Vorsprüngen 27 versehen ist, mit deren Hilfe die Sicherungsscheibe 26 gegen Drehung um die Achse 10 gesichert ist. Die Oberseite der Sicherungsscheibe 26 ist mit mehreren radial verlaufenden Zähnen 28 versehen, die mit Hilfe der Feder 24 in Eingriff mit entsprechenden Zähnen an der Unterseite der Mutter 25 gepreßt werden. Beim Anziehen und Lösen der Mutter 25 wird ein Hülsenschlüssel benutzt, mit dessen Hilfe die Sicherungsscheibe 26 nach unten gepreßt wird, so daß der Eingriff zwischen den Zähnen 28 und den Zähnen der Mutter 25 gelöst wird.

Nachdem die obere Gitterplatte 12 entfernt worden ist, können die Brennstäbe 1 ohne weitere vorhergehende Maßnahmen individuell herausgezogen werden.

Das anhand der Figuren beschriebene Brennstabbündel ist nur eine von vielen möglichen Ausführungsformen eines Brennstabbündels nach der Erfindung. So kann die obere Gitterplatte in der in den Patentansprüchen 1 und 2 beschriebenen Weise angeordnet und aufgebaut sein, auch wenn das Brennstabbündel nicht in mehrere Teilbündel aufgeteilt ist oder wenn es in anderer Weise in Teilbündel aufgeteilt ist, beispielsweise so, wie es in der europäischen Patentanmeldung 81 101 621.1 beschrieben ist. Statt auf den Stützleisten 2" zu ruhen, kann die obere Gitterplatte auf einer an der Stange 23 ausgebildeten Tragfläche ruhen. Statt mit mehreren unteren Gitterplatten 7 versehen zu sein, kann das Brennstabbündel eine einzige, für sämtliche Brennstäbe vorgesehene untere Gitterplatte haben.

**Patentansprüche**

1. Brennstabbündel für einen Siedewasserreaktor mit einer Brennstoffkanalvorrichtung (2) mit einer vertikalen Mittelachse (10), mit einer größeren Anzahl vertikaler Brennstäbe (1), mit einer größeren Anzahl von Abstandshaltern (6), mit einer oberen Gitterplatte (12), die im Ganzen oberhalb der Brennstäbe (1) angeordnet und derart ausgebildet ist, daß jeder Brennstab (1) bei einer genügend großen Verschiebung axial nach oben an einer weiteren Verschiebung in dieser Richtung durch mechanischen Kontakt mit der oberen Gitterplatte (12) gehindert wird, mit mindestens einer unteren Gitterplatte (7), wobei die Brennstäbe in der Brennstoffkanalvorrichtung (2) mit Hilfe der unteren Gitterplatte(n) (7) und der Abstandshalter (6) positioniert sind, und mit einem oberen Abschnitt der Brennstoffkanalvorrichtung mit im wesentlichen quadratischen Querschnitt, dessen Projektion in vertikaler Richtung sämtliche Brennstäbe (1) umschließt, dadurch gekennzeichnet, daß die Abstandshalter (6) im Verhältnis zu der Brennstoffkanalvorrichtung (2) eine begrenzte Beweglichkeit axial nach oben aufweisen, daß die obere Gitterplatte (12) einen im wesentlichen quadratischen Rahmen (13) hat, dessen Seiten an je einer Seite des oberen Brennstoffkanalabschnittes anliegt, daß vier diagonal und im wesentlichen horizontal verlaufende Diagonalschienen (14, 14') vorhanden sind, von denen jede mit dem Rahmen (13) an je einer Ecke starr verbunden ist und die miteinander durch einen zentralen Abschnitt (15) der oberen Gitterplatte (12) starr verbunden sind, daß jede Diagonalschiene (14, 14') in ihrem mittleren Abschnitt mechanisch starr mit dem mittleren Abschnitt je einer Querschiene (17) verbunden ist, deren Endpunkte starr mit dem Rahmen (13) verbunden sind, und daß die Diagonalschienen (14, 14') und die Querschienen (17) mit mehreren horizontal gerichteten Vorsprüngen (18, 18') versehen sind.

2. Brennstabbündel nach Anspruch 1, dadurch gekennzeichnet, daß jeder Quadrant des Brennstabbündels sechzehn in einem quadratischen Gitter angeordnete Brennstäbe (1) enthält, wobei die genannten Vorsprünge (18, 18') derart verteilt sind, daß zwei Vorsprünge (18) an jeder Diagonalschiene (14, 14') und vier Vorsprünge an jeder Querschiene (17) vorhanden sind.

3. Brennstabbündel nach einem der vorhergehenden Ansprüche, dadurch gekennzeichnet, daß der genannte zentrale Abschnitt der oberen Gitterplatte eine Hülse (15) ist, die abnehmbar einen oberen Endabschnitt eines langgestreckten, zentral angeordneten, zugkraftübertragenden Organs (23) umschließt, welches unterhalb der oberen Gitterplatte (12) in zugkraftübertragender mechanischer Verbindung mit der Brennstoffkanalvorrichtung (2', 2", 4, 3) steht, und daß das zugkraftübertragende Organ (23) mit Mitteln zur Begrenzung der axialen Bewegungsfreiheit der Hülse (15) im Verhältnis zu dem genannten zugkraftübertragenden Organ, zumindest in Richtung nach oben, versehen ist.

4. Brennstabbündel nach einem der vorhergehenden Ansprüche, dadurch gekennzeichnet, daß ein überwiegender Teil des Rahmens (13) auf solche Weise mit einem U-förmigen Querschnitt ausgeführt ist, daß ein längs mehrerer Seiten des genannten quadratischen Brennstoffkanalabschnittes verlaufender Kanal (21) gebildet wird.

5. Brennstabbündel nach einem der vorhergehenden Ansprüche, dadurch gekennzeichnet, daß die Brennstoffkanalvorrichtung einen sämtliche Brennstäbe umschließenden Brennstoffkanal (2) mit im wesentlichen quadratischem Querschnitt enthält, wobei die Seiten des Brennstoffkanals (2) jeweils mit einer vertikal verlaufenden Leiste (2") versehen sind, und daß die Hülse (15) derart mit einer Feder (24) versehen ist, daß die obere Gitterplatte gegen horizontale, nach oben gerichtete Tragflächen (22) an den oberen Enden der vertikal verlaufenden Leisten (2") gepreßt wird.

6. Brennstabbündel nach Anspruch 5, dadurch gekennzeichnet, daß das zugkraftübertragende Organ (23) an seinem oberen Ende mit Gewinde und einer darauf aufgesetzten Mutter (25) versehen ist, die eine unebene Anlagefläche hat, welche auf eine unebene, nach oben gerichtete Anlagefläche eines axial beweglichen, gegen Drehung um seine vertikale Achse gesicherten Sicherungsorganes (26) gerichtet ist, wobei mindestens eine der genannten Anlageflächen mit mindestens einer Erhöhung (28) versehen ist, die in eine entsprechende Vertiefung in der anderen Anlagefläche eingreift, wobei die Feder (24) das Sicherungsorgan (26) mit einer nach oben gerichteten Kraft beaufschlagt.

**Claims**

1. Fuel rod assembly for a boiling water reactor, comprising a fuel channel device (2) with a vertical central axis (10), a plurality of vertical fuel rods (1), a plurality of spacers (6), an upper grid plate (12) being arranged in its entirety above said fuel rods (1) and being conotructed in such a way that each fuel rod (1) upon a sufficiently long movement in an axially upward direction is prevented from further movement in said direction by mechanical contact with said upper grid plate (12), comprising further at least one lower grid plate (7), whereby said fuel rods in said fuel channel device (2) are positioned with the help of said lower grid plate(s) (7) and said spacers (6), and an upper portion of said fuel channel device having a substantially quadratic cross-section the projection of which in the vertical direction surrounds all the fuel rods (1), characterized in that the spacers (6) have a limited movability in relation to the fuel channel device (2) in an axially upward direction, that the upper grid plate (12) has a substantially quadratic frame (13), each side of which rests against one side of said fuel channel portion, that there ara four diagonally and substantially horizontally directed diagonal bars (14, 14'), which are rigidly connected to said frame (13) in one corner each and are rigidly connected to one another via a central portion (15) of said upper grid plate (12), that each of the diagonal bars (14, 14') is mechanically rigidly connected with its middle portion to the middle portion of a cross bar (17), the end points of which are rigidly connected to said frame (13), and that the diagonal bars (14, 14') and the cross bars (17) are provided with a plurality of horizontally directed projections (18, 18').

2. Fuel rod assembly according to claim 1, characterized in that each quadrant of the fuel rod assembly contains sixteen fuel rods (1) arranged in a square lattice, said projections (18, 18') being distributed in such a way that there are two projections (18) on each diagonal bar (14, 14') and four projections on each cross bar (17).

3. Fuel rod assembly according to any of the preceding claims, characterized in that said central portion of the upper grid plate consists of a sleeve (15), which detachably surrounds an upper end portion of an elongated, centrally arranged, tensil-force transmitting member (23) being arranged in a tensile-force transmitting mechanical connection with said fuel channel device (2', 2'', 4, 3) below the upper grid plate 12, and that said tensile-force transmitting member (23) is provided with means for limiting the axial freedom of movement of said sleeve (15) in relation to said tensile-force transmitting member, at least in an upward direction.

4. Fuel rod assembly according to any of the preceding claims, characterized in that a predominant part of said frame (13) is made with a U-formed cross-section in such a way that a channel (21) is formed, extending along a plurality of sides of said quadratic fuel channel portion.

5. Fuel rod assembly according to any of the preceding claims, characterized in that the fuel channel device comprises a fuel channel (2) surrounding all the fuel rods and having a substantially quadratic cross-section, each side ot he fuel channel (2) being provided with a vertically directed strip (2''), and that said sleeve (15) is provided with a spring (24) in such a way that the upper grid plate is pressed against horizontal, upwardly-facing supporting surfaces (22), provided at the upper ends of the vertically directed strips (2'').

6. Fuel rod assembly according to claim 5, characterized in that the tensile-force transmitting member (23) is provided at its upper end with threads carrying a nut (25) with an uneven contact surface facing an uneven, upwardly-facing contact surface of an axially movable locking member (26), which is secured against rotational movement about its vertical axis, whereby at least one of said contact surfaces is provided with at least one projection (28), which is held in engagement with a corresponding recess of the other contact surface, whereby said spring (24) exerts an upwardly directed force on said locking member (26).

**Revendications**

1. Grappe de crayons combustibles pour un réacteur à eau bouillante, comprenant un dispositif à boîtier-canal (2) ayant un axe central (10) vertical, un grand nombre de crayons combustibles (1) verticaux, un grand nombre d'entretoises (6), une plaque supérieure formant grille (12) disposée toute entière au-dessus des crayons combustibles (1) et agencée de manière à ce que chaque crayon combustible (1) soit empêché, en cas de déplacement axial suffisamment grand vers le haut, de continuer à se déplacer dans cette direction, par contact mécanique avec la plaque supérieure formant grille (12), au moins une plaque inférieure formant grille (7), les crayons combustibles étant positionnés dans le dispositif à boîtier-canal (2) à l'aide de la (ou des) plaque(s) inférieure(s) formant grille (7) et des entretoises (6), et une section supérieure du dispositif à boîtier-canal de section transversale sensiblement carrée et dont la projection suivant la direction verticale entoure l'ensemble des crayons combustibles (1), caractérisée en ce que les entretoises (6) présentent par rapport au dispositif à boîtier-canal (2) une mobilité limitée axialement vers le haut, en ce que la plaque supérieure formant grille (3) possède un cadre (13) sensiblement carré, dont les côtés sont respectivement en contact avec les côtés de la section supérieure du dispositif à boîtier-canal, en ce que sont prévus quatre rails en diagonale (14, 14') s'étendant en diagonale et sensiblement horizontalement, rails dont chacun est relié rigidement à un sommet du cadre (13) et qui sont reliés rigidement les uns aux autres par une section centrale (15) de la plaque supérieure formant grille (12), en ce que chaque rail en diagonale (14, 14') est relié mécaniquement et d'une manière rigide par sa section médiane à la section médiane d'un rail transversal (17) dont les points d'extrémité sont reliés rigidement au cadre (13) et en ce que les rails transversaux (17) sont munis de plusieurs parties en saillie (18, 18'), dirigées horizontalement.

2. Grappe de crayons combustibles suivant la revendication 1, caractérisée en ce que chaque cadran de la grappe de crayons combustibles comporte seize crayons combustibles (1) disposés suivant un réseau carré, lesdites parties en saillie (18, 18') étant réparties de manière à ce qu'il y ait deux parties en saillie (18) sur chaque rail en diagonale (14, 14') et quatre parties en saillie sur chaque rail transversal (17).

3. Grappe de crayons combustibles suivant l'une des revendications précédentes, caractérisée en ce que ladite section centrale de la plaque supérieure formant grille est une douille (15) qui entoure, avec possibilité de dégagement, une section d'extrémité supérieure d'un organe (23) oblong, disposé en position centrale, transmettant la force de traction et en liaison mécanique de transmission de la force de traction, en-dessous de la plaque supérieure formant grille (12), avec le dispositif à boîtier-canal (2', 2'', 4, 3), et en ce que l'organe (23) de transmission de la force de traction est muni de moyens destinés à limiter le degré de liberté du mouvement axial de la douille (15) par rapport audit organe de transmission de la force de traction, au moins en direction vers le haut.

4. Grappe de crayons combustibles suivant l'une des revendications précédentes, caractérisée en ce qu'une partie prépondérante du cadre (13) est réalisée de telle manière avec une section transversale en forme de U que se trouve formé un canal (21) s'étendant le long de plusieurs côtés de ladite section carrée de dispositif à boîtier-canal.

5. Grappe de crayons combustibles suivant l'une des revendications précédentes, caractérisée en ce que le dispositif à boîtier-canal comporte un boîtier-canal (2) entourant l'ensemble des crayons combustibles et ayant une section transversale sensiblement carrée, les côtés du boîtier-canal (2) étant munis respectivement d'une baguette (2'') s'étendant verticalement, et en ce que la douille (15) est munie de telle manière d'un ressort (24) que la plaque supérieure formant grille est pressée contre des surfaces horizontales de portée (22), tournées vers le haut et prévues aux extrémités supérieures des baguettes (2'') s'étendant verticalement.

6. Grappe de crayons combustibles suivant la revendication 5, caractérisée en ce que l'extrémité supérieure de l'organe (23) transmettant la force de traction est munie d'un filetage et d'un écrou (25) qui y est vissé et qui a une face de contact non plane, tournée vers une face de contact non plane, tournée vers le haut, d'un organe de blocage (26) mobile axialement et empêché de tourner autour de son axe vertical, l'une au moins desdites faces de contact étant munie d'une partie saillante (28) qui s'engage dans un évidement correspondant de l'autre face de contact, le ressort (24) appliquant à l'organe de blocage (26) une force dirigée vers le haut.

FIG. 1

*FIG.2*

*FIG.3*

## FIG. 4